# EUROPEAN PATENT APPLICATION

(11) **EP 4 148 922 A1**
(43) Date of publication of application: **15.03.2023**
(21) Application number: 21195538.0
(22) Date of filing: 08.09.2021
(51) Int. Cl.: H02G 1/10, H02G 9/12

(54) **FACILITY ARRANGEMENT AND METHOD FOR CONNECTING TWO OR MORE FACILITIES**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

Facility arrangement comprising two or more facilities (2, 3) and at least one connection means (4) connected to the facilities (2, 3), wherein the connection means comprises a transportation means (5), at least one buoyancy means (6) and/or at least one weight means (7), wherein the transportation means (5) is adapted for transportation of electricity and/or a fluid medium, wherein the buoyancy means (6) and/or the weight means (7) are attached to the transportation means (5),
- wherein the connection means (4) is arranged between two offshore facilities, wherein the transportation means (5) is floating at a distance from the seabed (11) over the entire or almost the entire distance between the facilities (2, 3), and/or
- wherein the buoyancy means (6) and/or the weight means (7) are attached to a first section (28) of the transportation means (5), wherein the first section (28) is connected to at least one offshore facility (2, 3) and arranged floating at a distance from the seabed (11), wherein a second section (29) of the transportation means (5) connected to the first section (28) and an onshore facility (27) is embedded in the seabed (11).

## Description

The invention relates to a facility arrangement comprising two or more facilities and at least one connection means connected to the facilities, wherein the connection means comprises a transportation means, at least one buoyancy means and/or at least one weight means, wherein the transportation means is adapted for transportation of electricity and/or a fluid medium, wherein the buoyancy means and/or the weight means are attached to the transportation means. Furthermore, the invention relates to a method for connecting two or more facilities with at least one connection means.

Wind parks and other arrangements of offshore facilities may require connection means that connect the individual facilities like the wind turbines to each other and also to further facilities like offshore substations and/or onshore facilities. In areas with deeper water, in which floating facilities like floating wind turbines are installed, an electrical connection may be established for instance by using dynamic cables with a high flexibility, which are able to withstand water movement like tidal movement, water currents and/or wave influence. Furthermore, also the movement of the wind turbines mounted on floating foundations may act on the dynamic cable so that it has to exhibit also a sufficient flexibility for withstanding the movements of the wind turbine foundations.

For connecting the wind turbines, it is known to arrange the cable between the wind turbines in or on the seabed and to connect its ends more or less vertically to the floating wind turbines. Therefore, the length of the cable has to bridge the distance between the wind turbines and two times the depth of the water. This requires comparatively long cables, in particular in regions with deep water. In addition, the need for a flexible cable, which is able to withstand the movement of the water and the connected facilities, requires the use of comparatively expensive cables.

As an alternative to the arrangement of the cable directly on the seabed, also a sub-sea connector may be used. However, the installation of a sub-sea connector on the seabed may be expensive, in particular in areas with deep water.

In WO 2019/153431 A1, an offshore arrangement with a connecting device is disclosed. The offshore arrangement comprises two substations, which are connected by a cable. The substations are connected to two connecting devices, which are arranged in the sea and which allow for connecting flexible cables between the connecting device and substations and to use a more rigid cable as an intermediate cable connecting the connecting devices.

The invention is based on the objective problem to provide a facility arrangement with an improved connection between two or more facilities.

According to the invention, this problem is solved by a facility arrangement as initially described,
- wherein the connection means is arranged between two offshore facilities, wherein the transportation means is floating at a distance from the seabed over the entire or almost the entire distance between the facilities, and/or
- wherein the buoyancy means and/or the weight means are attached to a first section of the transportation means, wherein the first section is connected to at least one offshore facility and arranged floating at a distance from the seabed, wherein a second section of the transportation means connected to the first section and an onshore facility is embedded in the seabed.

The facility arrangement may comprise one or more offshore facilities and/or one or more onshore facilities, which are connected using one or more connection means. The connection means may be used in particular for connecting two facilities. The connection means comprises a transportation means, at least one buoyancy means and/or at least one weight means. By using the buoyancy means and/or the weight means, an updrift, or a drown drag, respectively, may be applied to the transportation means when it is arranged in the water.

For connecting two offshore facilities, the connection means is arranged floating at a distance from the seabed over the entire or almost the entire distance between the facilities. In particular, the transportation means is arranged in a distance from the sea bed over the entire distance between the facilities. The transportation means is floating in the water over the entire distance or almost the entire distance. Almost the entire distance means in this context that the transportation means may be arranged at least partly above the sea surface in connection sections at the immediate proximity of the facilities, depending on the location of the connection to the transportation means at the facility.

By using the buoyancy means and/or the weight means, the density of the connection means may be adjusted to a certain water depth so that the transportation means is floating at a distance from the seabed over the entire or almost the entire distance between the facilities. The buoyancy means and the weight means may also be used to arrange the transportation means relative to the sea surface, or the sea bed, respectively. In particular, the transportation means is also floating at a distance from the water surface over the entire distance or almost the entire distance between the facilities so that vessels may pass by above the transportation means.

Due to its arrangement, the floating transportation means has a shorter length than a cable or a pipe which is arranged partly on or in the seabed since the distance between the facility and the seabed does not have to be bridged twice. Advantageously, this reduces the costs for fabrication and installation of the connection means.

Furthermore, the buoyancy means and/or the weight means, which are attached to the transportation means, allows for the usage of transportation means with a reduced flexibility. The usage of the buoyancy means and/or the weight means allows for stabilizing the floating arrangement of the transportation means and/or the position of the transportation means a certain depth, or within a target depth range, respectively, advantageously reducing the forces and loads acting on the transportation means.

In particular, it is possible to use a static transportation means which is originally designed for an arrangement in or on the seabed for connecting the facilities. Since less water-induced forces and loads are acting on cables or pipes that are arranged in or on the seabed, static cables or pipes that are less flexible can be used for this purpose. Due to the reduced flexibility requirements, static transportation means are generally cheaper than the more flexible dynamic transportation means. Advantageously, the floating arrangement of the transportation means using the buoyancy means and/or the weight means enables the usage of more cost-efficient static transportation means also in an arrangement above the seabed.

The one or more buoyancy means may be used for instance with a heavy transportation means, for instance with an electrical cable. Heavy means in this context that the density of the transportation means exceeds the density of water so that the transportation means experiences an initial down drag when arranged in the water. By the buoyancy means, the density of the connection arrangement may be lowered so that the floating arrangement of the transportation means becomes possible. The weight means may be used together with a transportation means that has a density lower than water, for instance a gas transportation pipe or the like. By the weight means, the density of the connection arrangement may be increased so that the floating arrangement of the transportation means above the seabed and in particular also below the water surface becomes possible.

In addition, also both buoyancy means and weight means may be attached to the transportation means in order to adjust a density of the connection means, for instance to keep the density of the connection arrangement within a certain range for filled, unfilled and/or differently filled hollow transportation means like gas pipes.

The facility arrangements have the advantage that the connection means is easy to install and that no sea bed interfaces are required for connecting two offshore facilities. Furthermore, the connection means can be realized with a reduced need for material and therefore cost-efficient. Since no structures, which have to be installed on the sea bed are required, the installation process and repair procedures are relatively easy.

For connecting an offshore facility to an onshore facility, a first section of the transportation means is connected to the offshore facility. The first section is arranged floating at a distance from the seabed. In particular, the first section is also arranged at a distance below the sea surface. The second section of the transportation means, which is directly connected to the first section of the transportation means, is embedded in the seabed and connected to an onshore facility at one end.

This allows for using a floating arrangement of the first section of the transportation means in the areas with deep water. To the first section, one or more buoyancy means and/or one or more weight means are attached as previously described. In areas with lower water, the second section of the transportation means may be embedded in the seabed. Compared to an arrangement of the transportation means embedded in the seabed or the entire distance, a reduced length of the transportation means is obtained, in particular due to the floating arrangement of the first section of the transportation means.

Depending on the position of the offshore facilities relative to the coast, the length of the second section may be between hundreds of meters and tens of kilometers. Also, the distances in between two offshore facilities and/or the length of the first section of the cable may be between hundreds of meters and tens of kilometers.

Preferably, the transportation means comprises at least one electrical cable, at least one optical cable and/or at least one pipe for gas transport. The electrical cable may be an AC-cable or a DC-cable, in particular for a high-power energy transport of electrical energy generated by a wind turbine. It is also possible to provide at least one electrical cable and/or at least one optical cable which is used for communication between the facilities and/or further communication devices.

The transportation means may also comprise at least one pipe for gas transport, for instance a gas pipe for the transport of hydrogen, methane, ammonia and/or another type of gas. The gas pipe, or tube, respectively, may consist for instance of a plastic material like high density polyethylene (HDPE).

In particular, the transportation means may comprise a plurality of electrical cables, a plurality of optical cables and/or a plurality of pipes for gas transport. The transportation means may be a bundle of cables and/or pipes. It is also possible that the transportation means comprises at least one cable, which is arranged inside an outer shell, in particular inside a tube, or a pipe, respectively, for the transportation of both gas and electrical energy. In addition or alternative, the outer shell may be a protective shell for protecting the cable form environmental influences. Depending on the composition of the transportation means, one or more buoyancy means and/or one or more weight means may be used to create updrift, and/or down drag, respectively, to the transportation means. In particular, when pipes for gas transport, which tend to flow when they are filled with gas during operation, are used, weight means may be attached to keep the transportation means within a target depth, or depth range, respectively, especially to avoid floating of the transportation means at the water surface.

The density of the buoyancy means and/or the weight means may be chosen in such manner, that the density of the connection arrangement, hence the density of the combination of the transportation means and the buoyancy means and other weight means, is approximately equal to the water density in the depth, in which the transportation means should be arranged in the water. It is also possible that the density is chosen in such manner that it is slightly below the density of the water in the target depth so that a small force directed downwards to the seabed is acting on the transport arrangement.

Preferably, the connection means is connected to a floating foundation, in particular a floating foundation moored to the seabed, of the offshore facility or the offshore facilities. Advantageously, the movement of the floating foundation of the offshore facility is usually limited, for instance when the floating foundation is moored to the seabed. Due to the limited movement of the floating foundation, also the movement of the connection means, or of the transportation means of the connection means, respectively, is limited. This reduces the loads and forces which has to be taken by the transportation means. Advantageously, the connection means and the floating arrangement of the transportation means, are the first section of the transportation means, respectively, may be used with any type of floating foundations. Preferably, the transportation means is arranged below the sea surface, in particular in a depth of ten meters or more. The arrangement of the transportation means below the sea surface allows that a vessel may pass above the transportation means and therefore also in between the two facilities connected by the connection means. A contact between the transportation means and a vessel, in particular the propeller of a vessel, may be avoided if the transportation means is arranged below the sea surface, for instance in a depth of ten meters or below.

In connecting regions, in which the transportation means is connected to an offshore facility, a lower depth of the transportation means and/or an arrangement of a section of the transportation means at the sea surface may be chosen may be chosen, depending on the position of the connecting interface between the transportation means and the facility. However, in this case the majority of the length of the transportation means, or its first section, is arranged below the sea surface. In particular, more than 90% or more than 95% of the length of the transportation means, or its first section, are arranged below the sea surface in a target depth, in particular in a depth of ten meters or more.

The target depth of the transportation means may also be a depth range, for instance a depth range between ten meters and 40 meters, or between 15 meters and 50 meters. However, also a larger depth, or a larger distance below the water level, may be chosen depending on the side conditions, for instance when strong currents are present at a certain water depth. By adjusting the depth of the transportation means in the water by using the buoyancy means and/or the weight means, an arrangement of the transportation means in areas with high currents and/or with the risk of being damaged due to vessel traffic may be avoided.

In a preferred embodiment, the second section of the transportation means is embedded in a coastal region, in particular in a region with a water depth of 50 meters or less. By using a transportation means which is partly embedded in the seabed, an unintended contact between the transportation means and a vessel may be prevented in a coastal region with lower water depth. Also, an obstruction of vessel traffic by the transportation means may be avoided. The cable may be embedded in the seabed for instance by arranging it in a trench, which has been plowed in the seabed prior to the arrangement of the transportation means, or the arrangement of the second section of the transportation means, respectively.

Preferably, the buoyancy means is a distributed buoyancy means that extends along at least a portion of the transportation means and/or the buoyancy means is a concentrated buoyancy means that is attached at one or more points to the transportation means. As a distributed buoyancy means, for instance a sheath, a rope or a wire of a low-density material may be used. Low density refers in this context to a material with a density lower than the density of water. The distributed buoyancy means may be for instance an elongated structure like a rope or wire made of nylon or another low-density material, which is wrapped along the transportation means at least in a portion of the transportation means or which is bundled with one or more transportation means in a mutual bundle. Also a sheath made of a low-density material that surrounds at least a portion of the transportation means may be used. In particular, one or more elongated buoyancy means extending along the entire transportation means may be used.

The distributed buoyancy means have the advantage that they do not have the risk of leaking and thereby changing the density, as it may be the case with a buoy. Therefore, the distributed buoyancy means are cost efficient and reliable buoyancy means.

In addition or alternatively, concentrated buoyancy means which are attached to the transportation means at one or more points may be used. A concentrated buoyancy means may comprise for instance a gas-filled cavity like a balloon, a gas-filled bell or the like. This type of buoyancy means may be attached to the transportation means at a single position, for instance by using an attachment means like a rope, a chain, a wire or a cable. Also an attachment to two or more points is possible.

Preferably, the weight means is a distributed weight means that extends along at least a portion of the transportation means and/or the weight means is a concentrated weight means that is attached at one or more points to the transportation means. As a distributed weight means, for instance a sheath, a rope or a wire of a high-density material may be used. High density refers in this context to a material with a density higher than the density of water. The distributed weight means may be for instance a rope or wire made of steel or another high-density material, which is wrapped along the transportation means at least in a portion of the transportation means or which is bundled with one or more transportation means in a mutual bundle. Also a sheath made of a high-density material that surrounds at least a portion of the transportation means may be used. In particular, one or more elongated weight means extending along the entire transportation means may be used.

In addition or alternatively, concentrated weight means which are attached to the transportation means at one or more points may be used. A concentrated weight means may comprise for instance a weight element made of a high-density material like steel or concrete. The concentrated weight means may be attached to the transportation means at a single position, for instance by using an attachment means like a rope, a chain, a wire or a cable. The concentrated weight means may also be attached to the transportation means at two or more points.

It is possible that a plurality of concentrated buoyancy means and/or a plurality of concentrated weight means is attached along a transportation means, or a portion of the transportation means, by using the attachment means. In particular, the concentrated buoyancy means and/or the concentrated weight means may be attached equidistantly to the transportation means. In addition or alternatively, a plurality of elongated buoyancy means and/or a plurality of elongated weight means may be attached to the transportation means so that they each extend along a portion of the transportation means, or its first section, respectively. Also the distributed buoyancy means and/or the distributed weight means may be distributed equidistantly along the length of the transportation means, or its first section, respectively.

Preferably, the buoyancy means is arranged at the sea surface or floating below the sea surface and/or the weight means is arranged on the seabed or floating above the seabed. Concentrated buoyancy means like buoys, balloons or gas-filled cavities may be arranged floating at the sea surface or floating below the sea surface. In particular, by using a plurality of such concentrated buoyancy means spaced in a distance to each other on the transportation means, a vessel traffic in between the buoyancy means becomes possible. These buoyancy means are in particular attached using attachment means like ropes, chains, wires or cables, so that the transportation means is floating at a distance below the buoyancy means at the water surface.

It is also possible, that the buoyancy means is arranged floating in the water, and hence in a distance to the water surface. This may be the case for concentrated and/or elongated buoyancy means.

The weight means may be arranged floating above the seabed, in particular when they are used together with a floating transportation means and/or buoyancy means causing an updrift of the connection means. Concentrated weight means, that comprise a weight element which is connected to the transportation means by an attachment means may also be arranged on the seabed so that the transportation means may float above the weight elements and hence above the seabed. A distributed weight means may float at the same depth as the transportation means.

It is possible that different types of buoyancy means and/or weight means and/or different types of arrangements, or positions, respectively, of the buoyancy means and/or the weight means are used along the length of the transportation means, or its first section, respectively. This allows for realizing different types of floating arrangement of the transportation means along the length of the transportation means, or its first section, respectively.

In a preferred embodiment, the buoyancy of the buoyancy means is adjustable by at least one adjustment means. This allows for adjusting the buoyancy of the buoyancy means in such manner that the transportation means, in particular a middle section of the transportation means spanning over the majority of the distance between the two connected facilities, is arranged within a target depth range in the sea. The adjustable buoyancy of the buoyancy means can be used to adapt the density of the connection means to a desired depth, or depth range, respectively.

Preferably, the buoyancy means comprises at least one cavity at least partially shielded from water, wherein at least one liquid and/or gaseous medium may be pumped in and/or removed from the cavity by the adjustment means for adjusting the buoyancy of the buoyancy means. Using a cavity like a balloon or partially shielded cavity like a bell, to which a gaseous medium may be pumped in and out, the density of the buoyancy means may be adjusted. Consequently, also the density of the connection arrangement may be adjusted to the depth, in which the transportation means shall flow in the water. The adjustable buoyancy of the buoyancy means can be used to lower the transportation means in the water, if the current position is too high, or to lift it up, if the current position is too deep, respectively.

Preferably, the connection means comprises a control unit, wherein the control unit is configured to control the adjustment means in dependency of the depth information, in particular to hold at least a section of the transportation means within a predetermined depth range. This allows for an automatic adjustment of the depth, in which the transportation means, or the first section of the transportation means, respectively, floats in the water. The depth information may be transmitted to the control unit from an external communication device or it may be determined by the connection means and/or one of the facilities.

In a preferred embodiment, the connection means comprises at least one sensing means for determining a depth of at least a section of the transportation means in the sea, wherein the sensing means is adapted to communicate a depth information describing the depth of the section of the transportation means to a further component of the connection means, to at least one of the facilities and/or to an external communication devise.

The depth information allows to adjust the position of the transportation means when environmental influences are changing. The position of the transportation means may change for instance due to updrift effects caused by currents, tidal movements or the like. Advantageously, these influences may be compensated using the adjustable buoyancy means.

In addition, the depth information created by the sensing means allows for causing a warning message if the transportation means is floating not deep enough for vessels to pass by above. The sensing means may be connected for example to one or more optical fibers of the transportation means. The sensing means may comprise for instance an optical fiber time domain reflectometer for determining the bending of the optical fibers and therefore the bending of the transportation means.

From this bending, the depth of the transportation means, or the depth distribution over the length of the transportation means, respectively, may be determined. For instance, when the transportation means is floating in a depth between zero meters and 15 meters, an alarm may be sent to warn vessels in the vicinity of the transportation means and to prevent a vessel activity around the floating transportation means. For the generation of the warning, the depth information may be communicated to a further component of the connection means, one of the facilities and/or to an external communication device, which may be located onshore and/or on a vessel in the vicinity of the connection arrangement.

For example, a system for tracking of an automatic indication systems (AIS) tracking the vessel position may be used to send a warning message to vessels in the vicinity of the transportation arrangement. The same system may be also used to send a warning message to vessels that have in advance set a sailing route that passes in between the two offshore facilities, or the offshore facility and the onshore facility, respectively, and hence above the transportation means.

In an embodiment, one or more weight means are attached to a central section of the transportation means and/or of the first section of the transportation means, wherein no weight means are attached outside of the central section. In particular, one single weight means may be used as a ballast unit in a central section of the transportation means. The transportation means is accordingly below the water level and comprises a bend, or curved shape, respectively. The deepest position of the transportation means will be in the central area, in which the at least one weight means is attached. In particular, a vessel traffic above the central portion of the transportation means becomes possible. The central section may be in particular the middle of the transportation means, or the middle of the first section respectively. Alternatively, the central section may be offset from the geometrical middle of the transportation means, or its first section, respectively.

In particular, both the transportation means and the weight means attached to the central section of the transportation means, or its first section, respectively, are floating in the sea. It is possible that in addition also buoyancy means, which are floating particular close to the transportation means below the sea level may be used. Alternatively, elongated buoyancy means extending along the transportation means may be used.

Such an arrangement facilitates the determination of the depth of the transportation means by a measurement of the bending of the transportation means. Since only one weight means, or a low number of weight means, is used, this type of arrangement allows for cost-efficient connection means.

Preferably, at least one of the offshore facilities is an offshore wind turbine and/or an offshore substation connected to one or more offshore wind turbines. The offshore substation may be a hub, which is connected to a plurality of offshore wind turbines and which collects gas and/or electricity provided by the wind turbines. The offshore substation may be used for instance to invert and/or transform electrical energy transported from the wind turbines to the substation.

In addition or alternatively, the offshore substation may be used to produce gas from electricity provided by the offshore wind turbines and/or to collect gas which is produced by the individual wind turbines and collected at the substation for being transported to the offshore substation. In particular, the offshore substation may be connected to an onshore facility, which may comprise for instance the connection to an electricity grid and/or to a gas grid. In particular, it is possible that a plurality of one or more floating wind turbines is connected to one or more floating offshore substations, wherein the one or more offshore substations are connected to one or more onshore facilities to allow for feeding the electricity and/or the gas into a power grid or a gas grid, respectively.

In a method according to the invention for connecting two facilities with a connection means comprising a transportation means, at least one buoyancy means and/or at least one weight means, wherein the transportation means is adapted for transportation of electricity and/or a fluid medium, wherein the connection means is arranged in the sea and wherein the buoyancy means and/or the weight means are attached to the transportation means,
- the connection means is connected to an offshore facility and arranged between the offshore facility and a further offshore facility, wherein the connection means is a ranged floating at a distance from the seabed over the entire or almost the entire distance between the facilities, and/or
- the buoyancy means and/or the weight means are attached to a first section of the transportation means, wherein the first section of the transportation means is connected to at least one offshore facility and arranged floating at a distance from the seabed, wherein the second section of the transportation means connected to the first section and to an onshore facility is arranged embedded in the seabed.

Connecting the two facilities by the connection means comprising the transportation means floating at a distance from the seabed over the entire or almost the entire distance between the facilities, or which is comprising a floating first section, respectively, an easy installation of a connection between the facilities is possible, in particular since no connection to undersea structures on the seabed or the like are required.

Preferably, the connection means is arranged using a vessel, wherein the connection means is lowered at least partly from the vessel into the sea for arranging it between the facilities. It is possible that the buoyancy means and/or the weight means are attached to the transportation means on bord on the vessel or that the connection means is loaded on the vessel already comprising the attached buoyancy means and/or weight means. Advantageously, both options allow for lowering the entire connection means from the vessel into the sea.

Due to the density adjustment obtainable by using the buoyancy means and/or the weight means, the transportation means arranges itself at the target depth in the sea. Also, weight means, which are arranged on the seabed, may be lowered from a vessel as they sink to the seabed automatically.

Advantageously, a simple vessel like a platform supply vessel (PSV) may be used for installation of the connection means. Preferably, a vessel with a digital position (DP) system is used to facilitate the arrangement of the connection means at the target positions, or along a target course, respectively.

In a preferred embodiment, the transportation means comprises an outer shell and at least one inner pipe and/or at least one inner cable, wherein the buoyancy means and/or the weight means are attached to the outer shell, wherein the outer shell is arranged between the facilities prior to an arrangement of the inner pipe and/or the inner cable in the outer shell. This allows for partial arranging of the connection means by lowering the outer shell from a vessel. After installation of the outer shell and/or the buoyancy means and/or the weight means attached to the outer shell in between the two facilities, the inner pipe and/or the inner cable of the transportation means may be pulled or pushed through the outer shell. The outer shell may be for instance a pipe or a tube which protects the inner pipe and/or the cable of the transportation arrangement.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a first embodiment of a facility arrangement according to the invention,
- Fig. 2: a second embodiment of a facility arrangement according to the invention,
- Fig. 3: a third embodiment of a facility arrangement according to the invention,
- Fig. 4: a fourth embodiment of a facility arrangement according to the invention,
- Fig. 5: a fifth embodiment of a facility arrangement according to the invention,
- Fig. 6: a detailed view of a connection means for an embodiment of a facility arrangement, and
- Fig. 7: a schematic depiction of connecting two facilities for describing an embodiment of a method for connecting at least two facilities according to the invention.

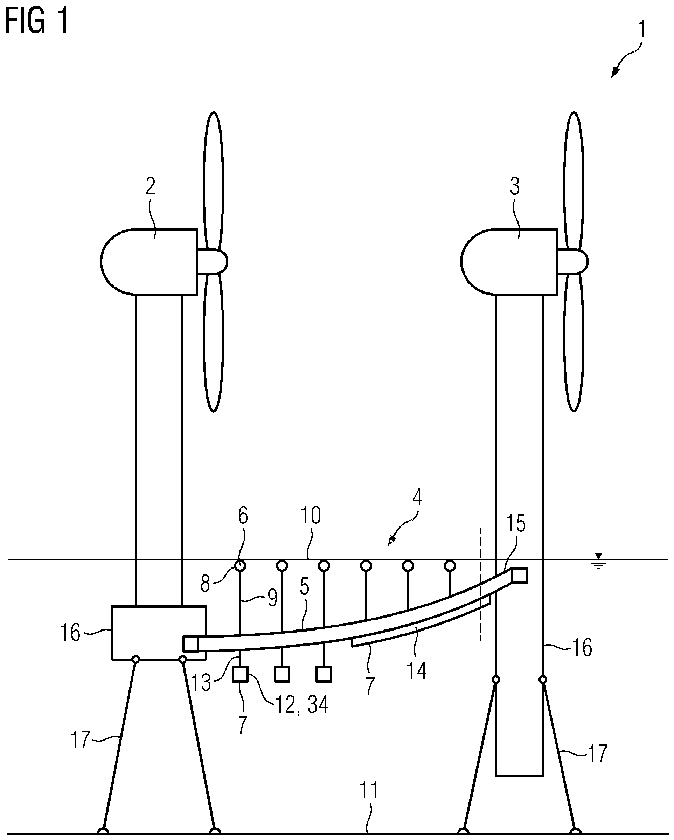

In fig. 1, a first embodiment of a facility arrangement 1 is shown. The facility arrangement 1 comprises two offshore facilities 2, 3 and a connection means 4. In this embodiment, the offshore facilities 2, 3 are floating offshore wind turbines.

The connection means 4 comprises a transportation means 5, a plurality of buoyancy means 6 and a plurality of weight means 7. The transportation means 5 is adapted for transportation of electricity and/or for transportation of a fluid medium. The buoyancy means 6 and the weight means 7 are attached to the transportation means 5.

The transportation means 5 is used to connect the two facilities 2, 3. The transportation means 5 may comprise at least one electrical cable, at least one optical cable and/or at least one pipe for gas transport. The electrical cable may be for instance an armoured sea cable or an unarmoured terrestrial cable, which is arranged in a pipe, wherein the pipe serves as a protection shell for the cable. In addition or alternatively, the pipe may be used for gas transport. The transportation means 5 may also comprise a plurality of cables and/or pipes allowing transportation of both electrical energy and gas.

The transportation means 5 is used to electrically connect the two facilities 2, 3 to each other, to slow for communication between the facilities 2, 3 and/or to allow for transportation of a fluid medium between the facilities 2, 3. It is in particular possible, that one or both of the facilities 2, 3 are connected to further facilities of the facility arrangement 1 by using further connection means 5.

The buoyancy means 6 and the weight means 7 attached to the transportation means 5 allow for adjusting the density of the connection means arrangement 4 and therefore to adapt the position of the transportation means 5 in the sea. Depending on the type of the transportation means 5, it is possible that only buoyancy means 6 or only weight means 7 are used. In particular a transportation means comprising one or more electrical cables for transportation of electrical energy may have a considerable weight so that additional weight means for obtaining the floating arrangement of the transportation means 5 are not required. In this case, only buoyancy means 6 may be used.

Contrary, a transportation means 5 which is used for transportation of a gas like hydrogen, ammonium, methane or another type of gas may have a density which is below the density of water, so that only one or more weight means 7 may be used for obtaining the floating arrangement of the transportation means 5.

In this embodiment, the buoyancy means 6 are provided as concentrated buoyancy means 8, which are provided as buoys each attached to the transportation means 5 at one or more points using an attachment means 9. The buoyancy means 6 are arranged at the sea surface 10, wherein the transportation means 5 is arranged below the sea surface 10, but above a seabed 11. The buoyancy means 6 at the sea surface 10 may be spaced apart equidistantly or with varying distances, in particular with sufficient distances for a vessel to pass by in between the buoys. Advantageously, the buoys at the sea surface 10 indicate the position of the transportation means 5 in the water. The concentrated buoyancy means 8 are in particular chosen in such manner that they stay at the sea surface 10 in calm weather conditions and tat they do not follow the movement of the sea in high wind and/or high wave weather conditions to reduce the movements inflicted on the transportation means 5. This has the advantage that the transportation means 5 is protected from wave movement. When there are big waves in the vicinity of the transportation means 5, it will stay relative in the sea level area, because the concentrated buoyancy means 8 can be designed with limited uplift that allows them to be submerged locally in the wave.

The weight means 7 are be provided as concentrated weight means 12 each comprising a weight element 34, which is attached to the transportation means 5 at one or more points using an attachment means 13. The weight elements 34 may consist for instance of metal, concrete or another high-density material which has a density exceeding the density of water.

In addition or alternatively, one or more elongated weight means 14 extending at least partially along the length of the transportation means 5 may be used. A distributed weight means 14 may be for instance a steel rope or a steel sheath, which is attached to the transportation means 5 for increasing its weight, or density, respectively. It is possible that only one or more distributed weight means 14 are used, that only concentrated weight means 12 are used, and/or that a combination of concentrated weight means 12 and elongated weight means 14 is used.

The attachment means 9 for attaching the buoyancy means 6 to the transportation means 5 may be cables, chains, ropes, or wires, in particular of a low-density material. The attachment means 13 of the weight means 7 may also be cables, chains, ropes, or wires, in particular with a density that is higher than water. The density of the plurality of buoyancy means 6 and the density of the plurality of weight means 7 may be adapted to allow for an arrangement of the connection means 4 within a target depth range in the sea under consideration of the density of the transportation means 5 and/or the densities of the attachment means 9, 13.

In particular, the transportation means 5 is arranged below the sea surface 10, in particular in a depth of 10 m to 40 m or more. In particular, a part of the transportation means 5 outside of connection areas 15 in the immediate proximity of the facilities 2, 3 is arranged in a depth of ten meters and more. The depth of the connection areas 15 in the sea, or their minimum distance from the sea surface 10, respectively, may depend on the type of the foundation 16 of the facility 2, 3, to which the transportation means 5 is attached.

The connection means 4 is connected to the floating foundations 16 of the offshore facility 2, 3. The connection means 5 may be attached to different types of floating connections 16 used for floating arrangement of offshore facilities like offshore wind turbines. The floating foundation 16 are in particular moored to the seabed 11 using a mooring arrangement 17.

The mooring arrangement 17 limits the movement of the floating foundations 16, or of the facilities 2, 3, respectively, on the water surface 10. This limits the loads and forces which act on the transportation means 5 arranged in between the facilities 2, 3. Furthermore, also the usage of the buoyancy means 6 and/or the weight means 7 stabilises the arrangement of the transportation means 5 in the sea. This allows for using a transportation means 5 with a comparably low flexibility as part of the connection means 4. Advantageously, this reduces the need for material and/or the costs of the realization of the transportation means 5, or the connection means 4, respectively.

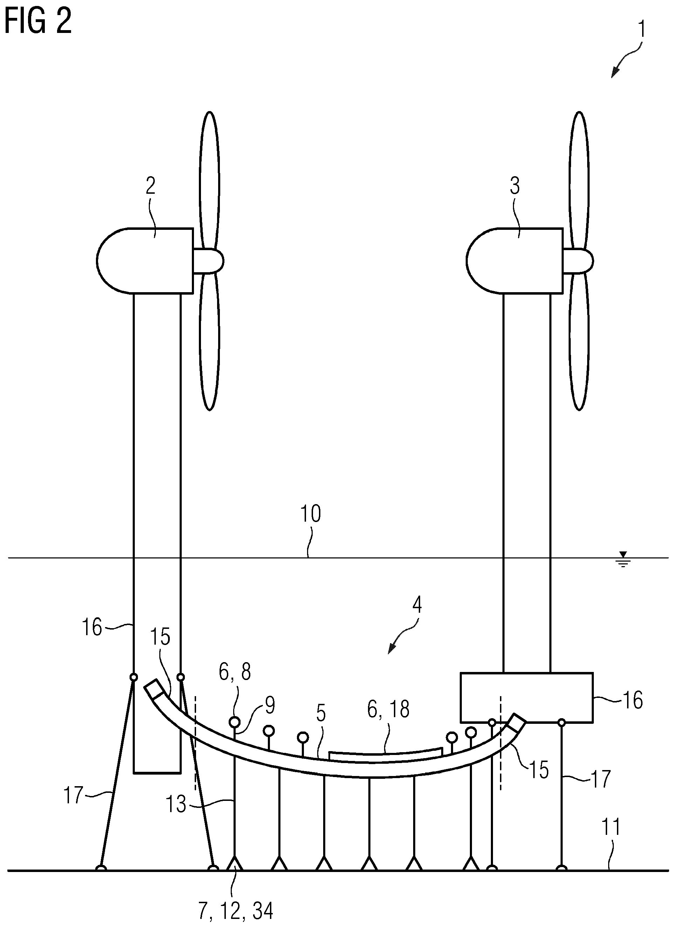

In fig. 2, a second embodiment of a facility arrangement 1 is shown. In this embodiment, the transportation means 5 may be for instance a pipe for hydrogen transport made of HDPE (High Density Polyethylene) and the weight means 7 are provided as concentrated weight means 12, which comprise each a weight element 34 arranged on the seabed 11. The weight elements 34 form anchors attaching the transportation means 5 on the seabed 11 and therefore stabilizing the position of the transportation means 5 in the sea.

Prior to an installation of the connection means 4, the depth is surveyed, for instance by the laying vessel, and the length of each attachment means 13 is adjusted so that the transportation means is more or less at the same water depth over the entire distance between the facilities, or over almost the entire distance except in the connection areas 15.

For example, in a water depth of 300 m, the attachment means 13 between the weight elements 34 and the transportation means 5 can be around 260 meters to position the transportation means in the target depth zone which can be for instance between a depth of 10 m to 40 m form the water surface 10. Depending on the conditions of environment in the vicinity of the facilities, also a positioning between the sea surface and larger depth, for example of 100 m or more, is possible.

The connection means 4 comprises a plurality of buoyancy means 6, which are provided as concentrated buoyancy elements 8, in particular as buoys, gas-filled bells, balloons or the like. In addition, a distributed buoyancy element 18 is used. The distributed buoyancy element 18 extends along a section of the transportation means 5. The distributed buoyancy means 18 may be for instance a cable or a rope of a material with a density lower than water, or a low-density wrapping or shell of the transportation means 5, respectively. It is possible that the distributed buoyancy element 18 extends over almost the entire length of the transportation means 5. In this case, the buoyancy elements 8 may be omitted.

Alternatively, it is also possible to omit the distributed buoyancy element 18 and to use only concentrated buoyancy elements 8, in particular each attached by using one or more attachment means 9. In this embodiment, the buoyancy means 6 are arranged below the sea surface 10. This allows for creating a path in between the facilities 2, 8 which may be passed by a vessel. Due to the floating arrangement of the transportation means 5 in the sea, in particular in a depth of 10 m, 15 m or more from the sea surface 10, a contact between the vessel, in particular the propeller of the vessel, and the transportation means 5 or other components of the connection means 4, may be avoided.

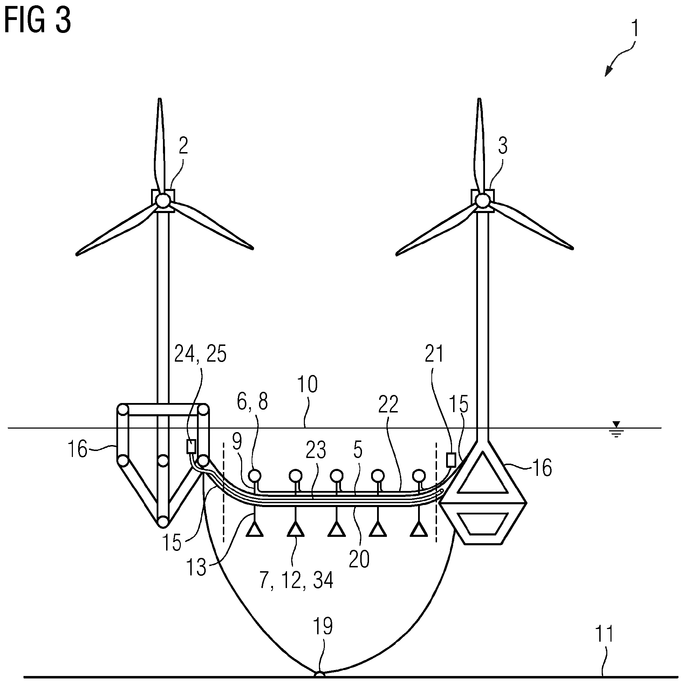

In fig. 3, a third embodiment of a facility arrangement 1 is shown. In this embodiment, the floating foundation 16 of the offshore facilities 2, 3 are attached using a mutual anchor point 19. The buoyancy means 6 and the weight means 7 are arranged both floating in water, so that both the buoyancy means 6 and the weight means 7 are arranged at a distance to the sea surface 10 and at a distance to the seabed 11.

Outside of the connection areas 15, in which the connection means 4 is connected to the offshore facilities 2, 3, or their floating foundations 16, respectively, the transportation means 5 comprises a straight middle section 20. A straight middle section 20 may be beneficial for transportation means 5 comprising at least one electrical cable since due to the reduced bending radii in this arrangement.

In particular, the straight middle section 20 may be arranged at a depth of 10 meters or more below the sea surface 10. For instance, the transportation means 5 may be arranged at a depth of 15 meters. In areas of a deep water with a depth of several 100 meters, also a deeper positioning of the transportation means 5, or its middle section 20, respectively is possible. This may occur for instance if in some areas currents or tidal movement are present and therefore comparatively high loads are acting on the transportation means 5 so that a deeper positioning becomes beneficial.

In this embodiment, the buoyancy means 6, which are provided as buoyancy elements 8, are adjustable and connected to an adjustment means 21, for instance by a pipe arrangement 22. By the adjustment means 21, the buoyancy of the buoyancy means 6 may be adjusted to adjust a density of the connection means and therefore the depth of the transportation means 5 in the water. The adjustment means 21 may be a part of the connection means 4 or a part of one of the facilities 2, 3.

The buoyancy means 6 comprise each at least one cavity, which is at least partially shielded from the water. By the adjustment means 21, at least one liquid medium and/or at least one gaseous medium may be pumped in and a removed from the cavity of the buoyancy means for adjusting the buoyancy of the buoyancy means 6. The buoyancy means 6 may be provided for instance as balloons or as bells, to which water or air may be added, or from which the water and/or the air may be removed, respectively.

In addition, the connection means 4 comprises a sensing means 23 for determining a depth of at least a section of the transportation means 5 in the sea. The sensing means 23 is adapted to communicate a depth information describing the depth of the transportation means 5, or the depth of a section of the transportation means 5, respectively, to a further component 24 of the facility arrangement 1. The further component 24 may be for instance a control unit 25.

The sensing means 23 may comprise for instance an optical time domain reflectometer, which is connected to an optical cable of the transportation means. The sensing means 23 is adapted to measure a curvature of the transportation means 5 and therefore enables the determination of a depth of the transportation means 5, or of a section of the transportation means 5, for instance of the middle section 20, respectively.

By the control unit 25, the adjustment means 21 may be controlled in dependency of the depth information obtain using the sensing devise 23. In particular, the control unit 25 may control the adjustment means to hold the transportation means 5, or at least the middle section 20 of the transportation means 5, within a predetermined depth range.

In addition, the depth information obtained by using the sensing means 23 may be communicated from the control unit 25 to the facilities 2, 3 and/or to an external communication device. When the depth information obtained by the sensing means 23 describes a depth of the transportation means 5 which is to shallow, a warning may be generated and sent to vessels in the vicinity of the facilities 2, 3 in order to prevent them from unintendedly contacting and/or damaging the transportation means 5. Although commercial vessel traffic may be prohibited in between the wind turbines of a wind park, vessel traffic may occur for instance due to repair procedures, supply procedures or the like.

For transmitting the warning, an automatic indication system may be used for tracking the data of vessels in the vicinity of the facilities 2, 3. This enables to send a message to vessels in the area of the offshore facilities 2, 3 and/or to vessels which have a targeted root near the facilities 2, 3 and/or in particular above the transportation means 5 that exhibits two shallow depths.

The usage of the adjustable buoyancy means 6 and/or the sensing means 23 is in particular advantageous if both the buoyancy means 6 and the weight means 7 are floating in the water below the sea surface 10 and above the seabed 11, since in such an arrangement, the transportation means 5 may exhibit more movement and therefore a less stable or varying floating position in the sea. Nevertheless, the adjustable buoyancy means 6 as well as the adjustment means 21, the sensing means 23 and/or the control unit 25 may also be used separately from each other and/or in the other embodiments of the facility arrangement 1.

As an alternative, it is possible that no buoyancy means 6 are used and that the floating arrangement of the transportation means 5 is obtained by using only a distributed weight means 14 attached to a transportation means 5 that comprises one or more gas-filled pipes. The connection means 4 may be realized in this case with a pipe, or tube, respectively, consisting of plastic material, for instance HDPE, as transportation means 4 comprising an outer surface of a heavier material as elongated weight means 14 to add weight to the transportation means 5. Also in this case a density equal to or slightly larger than the surrounding sea water may be obtained.

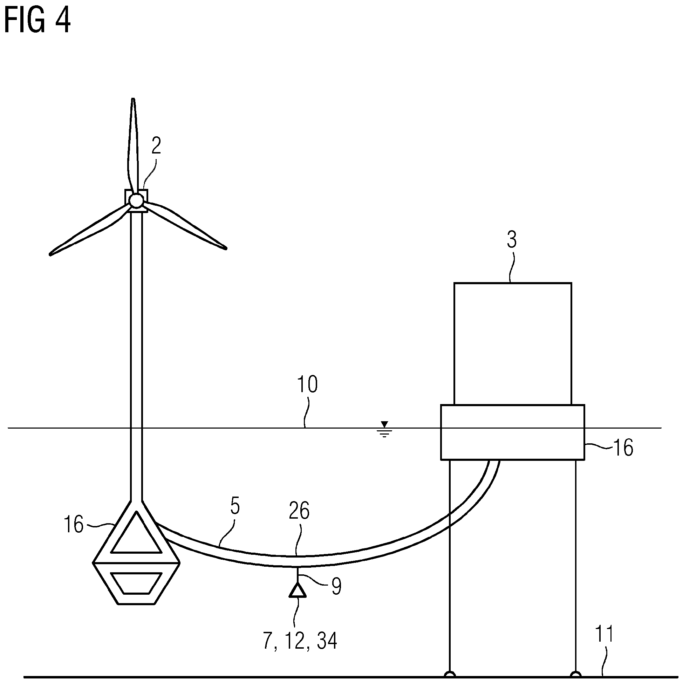

In fig. 4, a fourth embodiment of a facility arrangement 1 is shown. In this embodiment, the facility 3 is provided as a floating or as a bottom fixed offshore substation which works as a hub connecting in particular a plurality of offshore wind turbines.

The offshore substation may invert and/or transform electrical energy, which is transferred from one or more offshore wind turbines to the offshore substation using transportation means 5. It is also possible that the offshore substation produces gas from the electricity provided by the offshore wind turbines. The offshore substation may be connected for instance to an onshore facility to allow for feeding in gas and/or electricity provided by the facility arrangement 1 into a power grid, or a gas grid, respectively.

In this embodiment, one weight means 7 is attached to a central section 26 of the transportation means 5 to create a U-shaped bending of the transportation means 5 and therefore a path above the transportation means 5 which may be passed by vessels. Outside of the central section, in particular no further weight means 7 are arranged. Such an arrangement may be used for instance with a transportation means 5 that comprises one or more gas pipes and/or to create a comparatively deep sailing path above the transportation means 5 for vessel traffic. The central section may extend around the middle of the transportation means 5. The length of the central section may be 1% or less of the total length of the transportation means 5. It is also possible to use a central section which is arranged offset from a geometrical middle of the transportation means 5.

The weight means 7 is provided as a concentrated weight means 12 floating above the seabed 11. Alternatively, also a distributed weight means 14 and/or a concentrated weight means 12 arranged on the seabed 11 may be used. It is also possible that more than one weight means 7 are arranged at the central section 26 of the transportation means 5. In addition, also one or more concentrated buoyancy means 8 and/or one or more distributed buoyancy means 18 may be attached to the transportation means 5 as described in relation to the other embodiments.

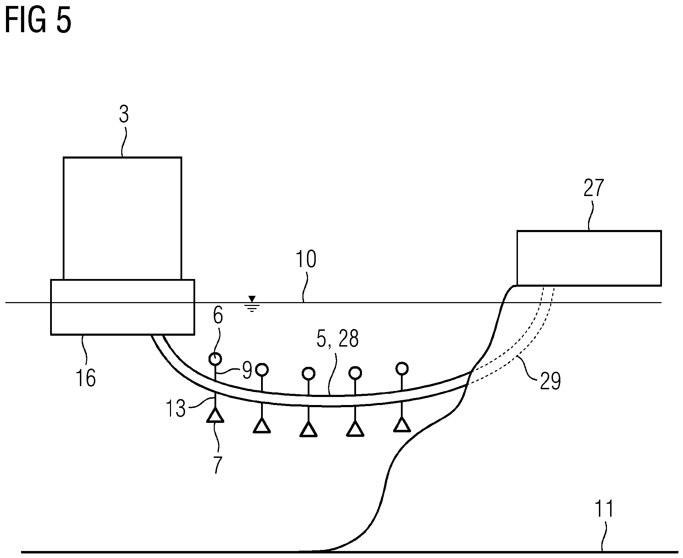

In fig. 5, a fifth embodiment of a facility arrangement 1 according to the invention is shown. In this embodiment, an offshore facility 3, which is provided as an offshore substation, is connected to an onshore facility 27. The transportation means 5 comprises a first section 28, which is arranged floating at a distance from the seabed 11. Furthermore, the connection means 5 comprises a second section 29, which is arranged embedded in the seabed 11. The second section 29 is connected to the onshore facility 27 and to the first section 29 of the transportation means 5. In particular, the transportation means 5 may be provided as at least one one-piece cable and/or at least one one-piece pipe, which is embedded with its second section 29 in the seabed 11.

For the floating arrangement of the first section 28 of the transportation means 9, an arrangement of buoyancy means 6 and/or weight means 7 according to one of the aforementioned embodiments may be used. As an example, an arrangement of buoyancy means 6 and weight means 7 according to the second embodiment are shown. However, the buoyancy means 6 and/or the weight means 7 may also be arranged according to another embodiment. It is also possible that for different segments of the first section 28, different types of arrangements of the buoyancy means 6 and7or the weight means 7 are used, so that the course of the first section 28 of the transportation means 5 may be adapted to the underwater surroundings.

The second section 29 of the transportation means 5 may be embedded in the seabed 11 for instance by arranging it in a trench plowed in the seabed. After arrangement of the transportation means 5, the trench may be closed. The second section 29 is embedded in a coastal region, in particular in a depth of 50 meters or less. Depending on the position of the offshore facility 3 and/or further offshore facilities connected to the offshore facility 3, the length of the first section and/or the length of the second section may be in the range of several hundreds of meters and tens of kilometers.

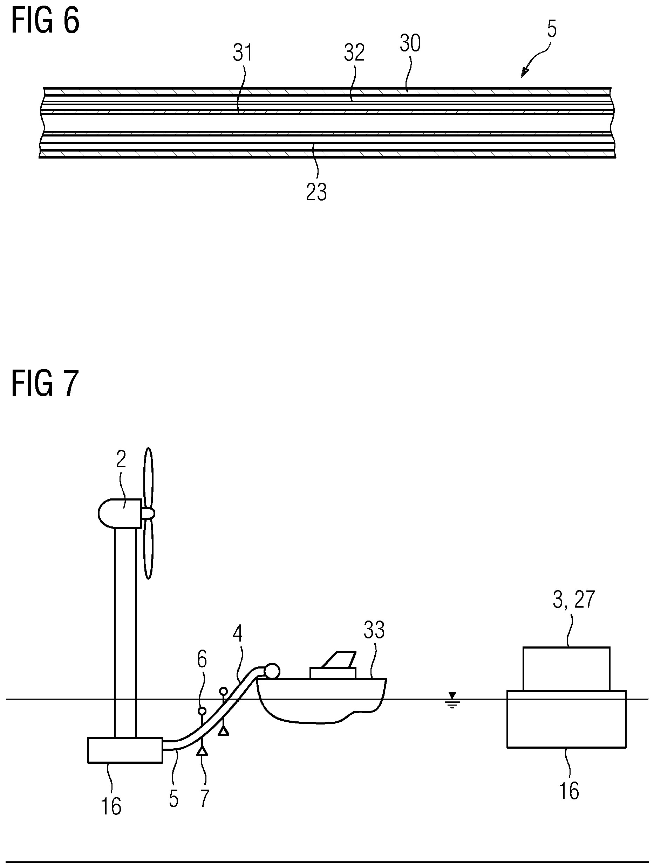

In fig. 6, an embodiment of the transportation means 5 is shown. In this embodiment, the transportation means 5 comprises an outer shell 30, in which an inner pipe 31 and inner cable 32 are arranged. Furthermore, a sensing means 23 is also arranged in the outer shell. Alternatively, the usage of a bundle of a plurality of electrical cables 32 and/or pipes 31 without an outer shell 30 as transport arrangement 5 is possible.

In fig. 7, a method for connecting two facilities 2, 3 using a connection means 4 is depicted schematically. The connection means 4 is arranged in between the facilities 2, 3. The facility 3 may be an offshore facility or an onshore facility. The facility 2 is an offshore facility, in particular a floating offshore wind turbine. The connection means 4 is arranged in between the facilities 2, 3 using a vessel 33. The vessel 33 may be a platform supply a vessel, from which the connection means 4 is lowered in the sea. The buoyancy means 6 and the weight element 7 of the connection means 4 may be attached to the transportation means 5 on bord of the vessel 33 and/or prior to loading the connection means 4 onto the vessel, so that the transport arrangement 5 will arrange floating in the sea in between the facilities 2, 3.

Alternatively, when a transportation means 5 with an outer shell 30 is used, the outer shell 30 may be lowered from the vessel 33. Also in this case, the buoyancy means 6 and/or the weight means 7 may be attached to the outer shell 30 on the vessel 33. Alternatively, the outer shell 30 may be provided on the vessel 33 already with the buoyancy means 6 and/or the weight means 7 attached to it.

After arranging the outer shell 30 in between the facilities 2, 3 the inner pipe 31 and/or the inner cable 32 may be pushed and/or pulled through the outer shell 30. The outer shell 30 may be for instance a hollow pipe so that the inner pipe 31 and/or the inner cable 32 may be arranged inside it to allow for transportation of electricity and/or a fluid medium in between the facilities 2, 3.

The different embodiments of the facility arrangement 1 may be used in different water depths. In particular, the connection means 4 may be attached to different types of floating foundation 16 of wind turbines 2 and/or to connect offshore wind turbines comprising different types of floating foundation 16, as schematically depicted by the different types of floating foundations 16 in the figs. 1 - 4.

Although the present invention has been described in detail with reference to the preferred embodiment, the present invention is not limited by the disclosed examples from which the skilled person is able to derive other variations without departing from the scope of the invention.

## Claims

1. Facility arrangement comprising two or more facilities (2, 3) and at least one connection means (4) connected to the facilities (2, 3), wherein the connection means comprises a transportation means (5), at least one buoyancy means (6) and/or at least one weight means (7), wherein the transportation means (5) is adapted for transportation of electricity and/or a fluid medium, wherein the buoyancy means (6) and/or the weight means (7) are attached to the transportation means (5),
- wherein the connection means (4) is arranged between two offshore facilities, wherein the transportation means (5) is floating at a distance from the seabed (11) over the entire or almost the entire distance between the facilities (2, 3), and/or
- wherein the buoyancy means (6) and/or the weight means (7) are attached to a first section (28) of the transportation means (5), wherein the first section (28) is connected to at least one offshore facility (2, 3) and arranged floating at a distance from the seabed (11), wherein a second section (29) of the transportation means (5) connected to the first section (28) and an onshore facility (27) is embedded in the seabed (11).

2. Facility arrangement according to claim 1, **characterized in that** the transportation means (5) comprises at least one electrical cable, at least one optical cable and/or at least one pipe for gas transport.

3. Facility arrangement according to claim 1 or 2, **characterized in that** the connection means (4) is connected to a floating foundation (16), in particular a floating foundation (16) moored to the seabed (11), of the offshore facility (2, 3) or the offshore facilities (2, 3).

4. Facility arrangement according to one of the preceding claims, **characterized in that** the transportation means (5) is arranged at least partly below the sea surface (10).

5. Facility arrangement according to one of the preceding claims, **characterized in that** the second section (29) of the transportation means (5) is embedded in a coastal region.

6. Facility arrangement according to one of the preceding claims, **characterized in that** the buoyancy means (6) is a distributed buoyancy means (18) that extends along at least a portion of the transportation means (5) and/or that the buoyancy means (6) is a concentrated buoyancy means (8) that is attached at one or more points to the transportation means (5) .

7. Facility arrangement according to one of the preceding claims, **characterized in that** the weight means (7) is a distributed weight means (14) that extends along at least a portion of the transportation means (5) and/or that the weight means (7) is a concentrated weight means (12) that is attached at one or more points to the transportation means (5).

8. Facility arrangement according to one of the preceding claims, **characterized in that** the buoyancy means (6) is arranged at the sea surface (10) or floating below the sea surface (10) and/or that the weight means is arranged on the seabed (11) or floating above the seabed (11).

9. Facility arrangement according to one of the preceding claims, **characterized in that** the buoyancy of the buoyancy means (6) is adjustable by at least one adjustment means (21) .

10. Facility arrangement according to claim 9, **characterized in that** the buoyancy means (6) comprises at least one cavity at least partially shielded from water, wherein at least one liquid and/or gaseous medium may be pumped in and/or removed from the cavity by the adjustment means (21) for adjusting the buoyancy of the buoyancy means (6).

11. Facility arrangement according to claim 9 or 10, **characterized in that** the facility arrangement (1) comprises a control unit (25), wherein the control unit (25) is configured to control the adjustment means (21) in dependency of the depth information, in particular to hold at least the section of the transportation means (5) within a predetermined depth range.

12. Facility arrangement according to one of the preceding claims, **characterized in that** the connection means (4) comprises at least one sensing means (23) for determining a depth of at least a section of the transportation means (5) in the sea, wherein the sensing means (23) is adapted to communicate a depth information describing the depth of at least the section of the transportation means (5) to a further component (24) of the facility arrangement (1), to at least one of the facilities (2, 3) and/or to an external communication device.

13. Facility arrangement according to one of the preceding claims, **characterized in that** one or more weight means (7) are attached to a central section (26) of the transportation means (5) and/or of the first section (28) of the transportation means (5), wherein no weight means (7) are attached outside of the central section (26).

14. Facility arrangement according to one of the preceding claims, **characterized in that** at least one of the offshore facilities (2, 3) is an offshore wind turbine and/or an offshore substation connected to one or more offshore wind turbines.

15. Method for connecting two facilities (2, 3) with a connection means (4) comprising a transportation means (5), at least one buoyancy means (6) and/or at least one weight means (7), wherein the transportation means (5) is adapted for transportation of electricity and/or a fluid medium, wherein the transportation means (5) is arranged in the sea and wherein the buoyancy means (6) and/or the weight means (7) are attached to the transportation means (5),
- wherein the connection means (4) is connected to an offshore facility (3) and arranged between the offshore facility (3) and a further offshore facility (2), wherein the transportation means (5) is arranged floating at a distance from the seabed (11) over the entire or almost the entire distance between the facilities (2, 3), and/or
- wherein the buoyancy means (6) and/or the weight means (7) are attached to a first section (28) of the transportation means (5), wherein the first section (28) is connected to at least one offshore facility (2, 3) and arranged floating at a distance from the seabed (11), wherein a second section (29) of the transportation means (5) connected to the first section (28) and to an onshore facility (27) is arranged embedded in the seabed (11).
